# EUROPEAN PATENT APPLICATION

(11) **EP 4 746 501 A1**
(43) Date of publication of application: **20.05.2026**
(21) Application number: 24850671.9
(22) Date of filing: 17.06.2024
(51) Int. Cl.: H04W 24/10

(54) **INFORMATION MEASUREMENT METHOD, ELECTRONIC DEVICE AND STORAGE MEDIUM**

(30) Priority: 10.08.2023 CN 202311013398
(71) Applicant: ZTE Corporation, Shenzhen, Guangdong 518057 (CN)
(72) Inventor: TAN, Jie, Shenzhen, Guangdong 518057 (CN); QIU, Zhihong, Shenzhen, Guangdong 518057 (CN); GAO, Yuan, Shenzhen, Guangdong 518057 (CN); SHA, Xiubin, Shenzhen, Guangdong 518057 (CN); LIU, Yansheng, Shenzhen, Guangdong 518057 (CN); ZHANG, Man, Shenzhen, Guangdong 518057 (CN)
(74) Representative: Aipex B.V.
(86) International application number: PCT/CN2024/099493
(87) International publication number: WO 2025/031019

(57) **Abstract**

Provided are an information measurement method, an electronic device and a storage medium. The method includes: performing a quality-of-experience measurement according to acquired first signaling; and processing a measurement report of the quality-of-experience measurement. The quality-of-experience measurement is processed and protected, which can prevent the signaling-based quality-of-experience measurement from being overwritten, improve the quality of wireless communications and ensure the quality-of-experience.

## Description

### TECHNICAL FIELD

The present application relates to the field of wireless communications and, in particular, to an information measurement method, an electronic device and a storage medium.

### BACKGROUND

At present, to learn the end-to-end customer experience, such as throughput, data loss, delay and other indicators, quality of experience (QoE) measurement is gradually valued by operators. QoE measurement can be determined according to different applications. Measurement is mainly performed in the application layer of a user equipment, and parameters such as throughput, data loss and delay can be measured. The QoE measurement collection (QMC) function is activated by operations, administration, and maintenance (OAM) through a separate QMC framework. For signaling-based QoE, the QMC configuration for a particular user equipment is transmitted from the OAM to a core network, and the core network transmits the QMC configuration to the radio access network (RAN) node through the signaling associated with the user equipment. For management-based QoE, the OAM transmits the QMC configuration to the RAN node, and the RAN selects the user equipment that satisfies the QoE measurement condition and transmits the configuration to the user equipment. RAN-visible QoE (RVQoE) is a sub-function of the QoE. The RAN can configure the RVQoE according to its own requirements. When the QoE has been activated, the RVQoE should be associated with the QoE through a measurement identity (ID) of the QoE. The user equipment collects the RVQoE measurement result and reports the RVQoE measurement result to the RAN node. However, in the existing QoE measurement process, signaling-based QoE measurement is overwritten by management-based QoE measurement, and the signaling-based QoE measurement lacks corresponding protection strategies at present.

### SUMMARY

Embodiments of the present application aim to provide an information measurement method, an electronic device and a storage medium.

An embodiment of the present application provides an information measurement method. The method includes performing a quality-of-experience measurement according to acquired first signaling; and processing a measurement report of the quality-of-experience measurement.

An embodiment of the present application further provides an electronic device. The electronic device includes at least one processor and a memory configured to store at least one program.

The at least one program, when executed by the at least one processor, causes the at least one processor to perform the method according to any embodiment of the present application.

An embodiment of the present application further provides a computer-readable storage medium. The computer-readable storage medium stores at least one program. The at least one program is configured, when executed by at least one processor, to cause the at least one processor to perform the method according to any embodiment of the present application.

### BRIEF DESCRIPTION OF DRAWINGS

FIG. 1 is a flowchart of an information measurement method according to an embodiment of the present application.
FIG. 2 is an example diagram of an information measurement method according to an embodiment of the present application.
FIG. 3 is an example diagram of an information measurement method according to an embodiment of the present application.
FIG. 4 is a flowchart of another information measurement method according to an embodiment of the present application.
FIG. 5 is a flowchart of another information measurement method according to an embodiment of the present application.
FIG. 6 is a flowchart of another information measurement method according to an embodiment of the present application.
FIG. 7 is a flowchart of another information measurement method according to an embodiment of the present application.
FIG. 8 is a structural diagram of an information measurement apparatus according to an embodiment of the present application.
FIG. 9 is a structural diagram of an electronic device according to an embodiment of the present application.

### DETAILED DESCRIPTION

It is to be understood that the embodiments described herein are intended to explain the present application, not to limit the present application.

In the subsequent description, a word such as "module", "component", or "unit" for representing an element is used merely to facilitate the description of the present application and has no particular meaning in itself. Therefore, "module", "component", and "unit" may be used in a mixed manner.

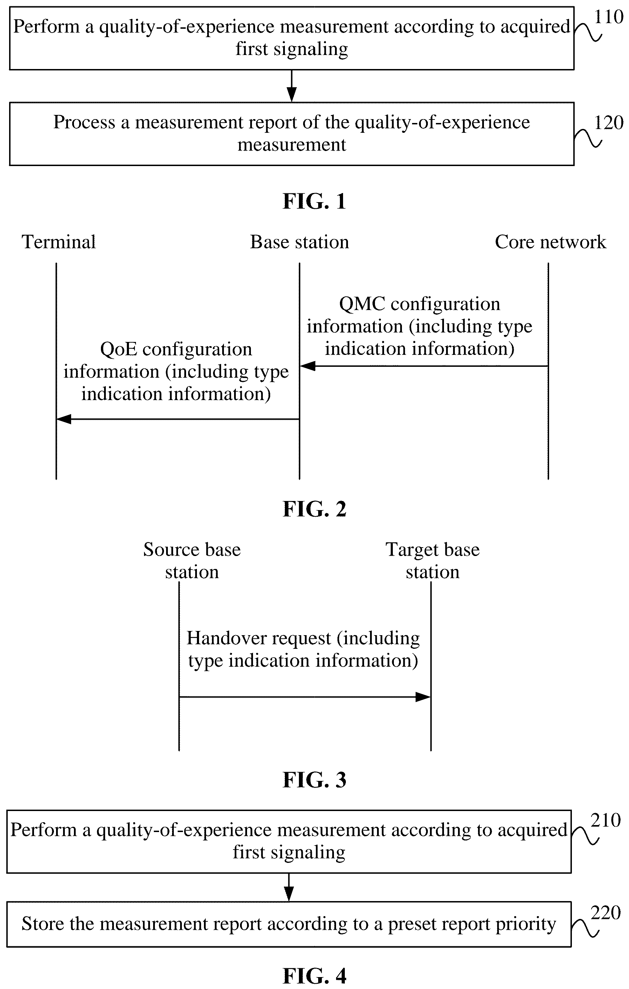

FIG. 1 is a flowchart of an information measurement method according to an embodiment of the present application. The present application is applicable to the case of a quality-of-experience measurement in a wireless communications scenario. The method may be performed by an information measurement apparatus. The apparatus may be implemented by software and/or hardware. Referring to FIG. 1, the method provided in the embodiment of the present application specifically includes the steps below.

In step 110, a quality-of-experience measurement is performed according to acquired first signaling.

The first signaling may be signaling that triggers the quality-of-experience measurement.

In the embodiment of the present application, when the first signaling is received, the quality-of-experience measurement may be performed.

In step 120, a measurement report of the quality-of-experience measurement is processed.

In the embodiment of the present application, the measurement report of the quality-of-experience measurement may be generated, and the measurement report may be processed. The processing may include, but is not limited to, storing the measurement report and reporting the measurement report.

By performing the quality-of-experience measurement according to the acquired first signaling and processing the measurement report of the quality-of-experience measurement, the quality-of-experience measurement can be processed and protected, preventing the signaling-based quality-of-experience measurement from being overwritten, improving the quality of wireless communications and ensuring the quality-of-experience.

In some embodiments of the present application, the first signaling includes at least type indication information, and the type indication information includes at least one of:
an enumerated quality-of-experience type including at least one of a signaling-based quality-of-experience measurement or a management-based quality-of-experience measurement;
a quality-of-experience type indicator bit; or
a signaling presence indication identifier.

In the embodiment of the present application, the first signaling indicating the quality-of-experience measurement may carry the type indication information, and the type indication information may indicate a type of the quality-of-experience measurement, for example, the type indication information may indicate a signaling-based quality-of-experience measurement and/or a management-based quality-of-experience measurement. Specifically, the type indication information may indicate the type in the form of an enumeration, an indicator bit, or a presence indication. When the type indication information adopts the enumeration, the type indication information may specifically be the enumerated quality-of-experience type, and at least one of the signaling-based quality-of-experience measurement and the management-based quality-of-experience measurement is enumerated in the enumerated quality-of-experience type. When the type indication information adopts the indicator bit, the type indication information may indicate types of different quality-of-experience measurements by specifying different set manners of the indicator bit. For example, the type indication information may adopt a 1-bit quality-of-experience type indicator bit for indication. When the quality-of-experience type indicator bit is 0, it indicates that the type of the quality-of-experience measurement is a management-based quality-of-experience type, and when the quality-of-experience type indicator bit is 1, it indicates that the type of the quality-of-experience measurement is a signaling-based quality-of-experience type. The type indication information may also use the manner of whether an identifier bit of the signaling-based quality-of-experience measurement is present for indication. The type indication information may be a signaling presence indication identifier. When the signaling presence indication identifier is 0, the type of the quality-of-experience measurement is a management-based quality-of-experience measurement, and when the signaling presence indication identifier is 1, the type of the quality-of-experience measurement is a signaling-based quality-of-experience measurement.

In an example embodiment, since the signaling-based quality-of-experience measurement is different from the management-based quality-of-experience measurement, the signaling-based quality-of-experience measurement needs to be prevented from being overwritten by the management-based quality-of-experience measurement. The signaling-based quality-of-experience measurement may be protected in the manner of indicating the type of the quality-of-experience measurement. The transmitted configuration information of the QoE may include type indication information of the current QoE. The manner may be applied by a terminal in the following terminal states, such as an idle state, an inactive state and a connected state. The type indication information indicates at least one piece of the following information:
1. the enumerated QoE type, that is, a signaling-based type or a management-based type;
2. a one-bit indication, where, for example, 0 represents management and 1 represents signaling, or vice versa;
3. a presence indication, where presence is set to indicate adoption of a signaling-based QoE type, and absence is set to indicate non-adoption of a signaling-based QoE type.

Further, referring to FIG. 2, a core network notifies a base station of the type of the current QoE measurement through type indication information included in QMC configuration information, and the base station notifies a terminal of the type of the current QoE measurement through type indication information included in QoE configuration information; referring to FIG. 3, a source base station notifies a target base station of the type of the current QoE measurement through type indication information included in a handover request.

In some embodiments of the application, the measurement report includes type indication information of the quality-of-experience measurement.

In the embodiment of the present application, the generated measurement report may include the type indication information of the quality-of-experience measurement, and through the type indication information corresponding to the measurement report, the overwriting between measurement reports of different types of quality-of-experience measurements can be prevented, thereby ensuring the protection of the signaling-based quality-of-experience measurement.

On the basis of the preceding embodiment of the application, the type indication information included in the measurement report includes at least one of:
type indication information configured for each measurement configuration application layer identifier; or
type indicator bits configured according to a numbering order of each measurement configuration application layer identifier.

In the embodiment of the present application, the type indication information carried in the measurement report may be the type indication information configured for each measurement configuration application layer identifier or may be a type indicator bit. The measurement report has multiple type indicator bits, and each type indicator bit corresponds to one measurement configuration application layer identifier. An order of the type indicator bits may be consistent with the numbering order of the measurement configuration application layer identities.

In some example embodiments, through the type indication information carried in the measurement report, the signaling-based quality-of-experience measurement can be protected from being overwritten by the management-based quality-of-experience measurement. The measurement report may carry type indication information of the current quality-of-experience measurement. The manner may be implemented by the terminal in one of the following terminal states: transmission through uplink small data packet transmission (SDT) in a non-connected state, or transmission through an application layer message of the measurement report in a connected state. The type indication information carried in the QoE measurement report includes at least one piece of the following information:
1. a piece of QoE type indication information configured for each measurement configuration application layer ID, and the configured QoE type indication information includes at least one piece of the following information:
   (a) the enumerated QoE type, that is, a signaling-based type or a management-based type;
   (b) a one-bit indication, where, for example, 0 represents management and 1 represents signaling, or vice versa;
   (c) a presence indication, where presence is set to indicate adoption of a signaling-based QoE type, and absence is set to indicate non-adoption of a signaling-based QoE type;
2. 16-bit indication information correspondingly set based on the order numbers of the measurement configuration application layer IDs, and each bit corresponds to an information indication indicating whether it is the signaling-based QoE configuration or not.

In the case where the base station is configured, the terminal stores at least one of the application layer ID of the measurement report or the indication information indicating the signaling-based QoE configuration. In addition, when the transmission is performed through the uplink SDT in the non-connected state, an ability to support signaling radio bearer (SRB) 4 needs to be defined in the SDT.

In some embodiments of the present application, the information measurement method provided in the embodiment of the present application further includes storing a measurement configuration application layer identifier and type indication information configured for the quality-of-experience measurement.

In the embodiment of the present application, the measurement configuration application layer identifier and the type indication information configured for the quality-of-experience measurement may also be stored.

FIG. 4 is a flowchart of another information measurement method according to an embodiment of the present application. This embodiment of the present application is the refinement based on the preceding embodiment of the present application. Referring to FIG. 4, the method provided in this embodiment of the present application specifically includes the steps below.

In step 210, a quality-of-experience measurement is performed according to acquired first signaling.

In step 220, the measurement report is stored according to a preset report priority, where in the preset report priority, a priority of a management-based measurement report is lower than a priority of a signaling-based measurement report.

The preset report priority may be a priority for processing different types of measurement reports. A high-priority measurement report may be processed before a low-priority measurement report. In the preset report priority, the priority of the management-based measurement report is lower than the priority of the signaling-based measurement report. That is, when two types of measurement reports are acquired, the signaling-based measurement report is processed before the management-based measurement report.

In the embodiment of the present application, the measurement report of the quality-of-experience measurement may be determined, and the measurement report may be stored according to the preset report priority. In the determined measurement report, the signaling-based measurement report is stored before the management-based measurement report.

In some embodiments of the application, storing the measurement report according to the preset report priority includes:
determining target measurement reports lower than the preset report priority of the measurement report in a preset storage area; and determining a stored measurement report stored for the longest time among the target measurement reports, and replacing the stored measurement report with the measurement report.

The target measurement reports may be other types of measurement reports lower than the measurement report in the preset report priority. The target measurement reports may be stored in the preset storage area, and a storage space may be configured for the preset storage area in advance for storing the measurement reports. The stored measurement report may be the measurement report stored for the longest time among the target measurement reports.

In the embodiment of the present application, the priority of the measurement report currently generated based on the first signaling may be determined in the preset report priority, one or more target measurement reports lower than the priority may be found in the preset storage area, the stored measurement report stored for the longest time may be determined among the target measurement reports, and in the preset storage area, the stored measurement report may be replaced with the measurement report.

In some other embodiments of the application, storing the measurement report according to the preset report priority includes:
determining each stored measurement report in a preset storage area, where each stored measurement report includes a replaceable storage specification, and the replaceable storage specification is indicated based on storage specification indication information configured for the quality-of-experience measurement; and selecting a target stored report among all stored measurement reports according to a preset selection rule, and replacing the target stored measurement report with the measurement report until a replacement storage of the target stored measurement report is greater than or equal to a replaceable storage specification of the target stored measurement report.

The stored measurement report may be a measurement report already stored in the preset storage area. The stored measurement report may be a measurement report of the same type or a different type as the measurement report currently to be stored. The replaceable storage specification may be a storage size that may be replaced in each measurement report. The replaceable storage specification may be indicated by storage specification indication information at a position of the quality-of-experience measurement corresponding to each measurement report. It may be understood that the storage specification indication information may indicate a size of the replaceable storage specification. The preset selection rule may be a rule for selecting the target stored report for replacement. The preset selection rule is determined based on at least a preset report priority.

In the embodiment of the present application, all the stored measurement reports may be acquired in the preset storage area, each stored measurement report includes at least a respective replaceable storage specification, the replaceable storage specification of each stored measurement report is indicated by the storage specification indication information configured for the corresponding quality-of-experience measurement, the target stored measurement report may be selected among the stored measurement reports according to the preset selection rule, and the target stored measurement report is replaced with the generated measurement report until the replaced replacement storage of the target stored measurement report is greater than or equal to the replaceable storage specification of the target stored measurement report.

On the basis of the preceding embodiments of the present application, the preset selection rule includes at least one of:
selecting the target stored measurement report according to an order of the management-based measurement report first and then the signaling-based measurement report; or
selecting the target stored measurement report according to an order of a measurement report stored for a long time first and then a measurement report stored for a short time.

In the embodiment of the present application, the preset rule of selecting the target stored measurement report among the stored measurement reports may include selecting the target stored report among the stored measurement reports according to the order of the management-based measurement report first and then the signaling-based measurement report, that is, when the stored measurement reports have the management-based measurement report, the management-based measurement report is selected as the target stored report first; the preset rule may further include selecting the measurement report stored for a long time first and then selecting the measurement report stored for a short time, that is, selecting a measurement report stored for the longest time among all the stored measurement reports as the target stored measurement report first. It may be understood that in some example embodiments, all management-based measurement reports may be selected first according to the order of management-based measurement report first and then the signaling-based measurement report and a measurement report stored for the longest time among all the management-based measurement reports may be selected as the target stored measurement report.

In an example embodiment, the protection of the signaling-based quality-of-experience measurement may be implemented based on the storage of the measurement report. A higher storage priority may be configured for a measurement report of the signaling-based quality-of-experience measurement, that is, a storage priority of the management-based measurement report is lower than the storage priority of the signaling-based measurement report by default, and the storage priority may assist the terminal device in selectively replacing the measurement report when a memory is full. A process of replacing the measurement report includes at least one of the steps below.
1. The replacement of the management-based QoE measurement report is prioritized over the replacement of signaling-based QoE measurement report. The replacement of the measurement report stored for the longest time is prioritized among the measurement reports. For example, when the report storage is full, the UE prioritizes the replacement of the management-based QoE measurement report and replaces the oldest measurement report among the measurement reports. After the replacement of the management-based QoE measurement report is finished, replacing the signaling-based QoE measurement report is considered.
2. The base station configures a replaceable storage size for each QoE, that is, the QoE configuration information includes storage size indication information for storing the measurement report, for example, 2k, 4k, 8k, 16k or 32k. Further, the replacement of the management-based QoE measurement report is prioritized and starts from the oldest report. The measurement report configured for this QoE is not replaced any longer until the replacement reaches a storage size which is allowed to be replaced, and reports configured for other QoE are replaced instead. Then, the signaling-based QoE measurement report is replaced. The replacement of the measurement report stored for the longest time is prioritized until a size which is allowed to be replaced is reached.

In some embodiments of the application, processing the measurement report of the quality-of-experience measurement includes at least one of:
not transmitting an availability indication of the measurement report to a new node when the new node is accessed, and transmitting the availability indication of the measurement report to an original requesting node when the original requesting node that initiates the quality-of-experience measurement is re-accessed;
transmitting an availability indication of the measurement report to a new node when the new node is accessed;
releasing stored quality-of-experience measurement configuration information and the measurement report when a new node is accessed; or
releasing stored quality-of-experience measurement configuration information and the measurement report when an original requesting node that initiates the quality-of-experience measurement is disconnected.

In the embodiment of the present application, different processing may be performed on the measurement report of the quality-of-experience measurement at different occasions. The processing of the measurement report of the quality-of-experience measurement may include, but is not limited to, not transmitting an availability indication of the measurement report to a new node when the new node is accessed, and transmitting the availability indication of the measurement report to an original requesting node when the original requesting node that initiates the quality-of-experience measurement is re-accessed; transmitting an availability indication of the measurement report to a new node when the new node is accessed; releasing stored quality-of-experience measurement configuration information and the measurement report when a new node is accessed; and releasing stored quality-of-experience measurement configuration information and the measurement report when an original requesting node that initiates the quality-of-experience measurement is connected.

In some embodiments of the application, the availability indication of the measurement report is included in at least one of terminal device assistance information, an uplink information transmission or a terminal device information response.

In an example embodiment, in a handover scenario, to prevent the terminal from reporting RVQoE stored for the source base station to a new base station and implement the report of the quality-of-experience measurement, the RVQoE measurement report of the source base station may be subjected to at least one of the processing below.
1. After the terminal accesses the new base station, the terminal does not transmit an availability indication of the RVQoE measurement report to the new base station. Moreover, the terminal stores the relevant measurement report and transmits the availability indication of the RVQoE measurement report when the terminal re-accesses a base station that initiates an RVQoE measurement.
2. After the terminal accesses the new base station, the terminal transmits the availability indication of the RVQoE measurement report to the new base station.
3. When the terminal accesses the new base station, the terminal releases the stored RVQoE configuration information and measurement report.
4. When the terminal leaves the source base station, the terminal releases the stored RVQoE configuration information and measurement report.

The availability indication of the RVQoE measurement report is included in at least one of UE assistance information, an uplink information transmission or a UE information response.

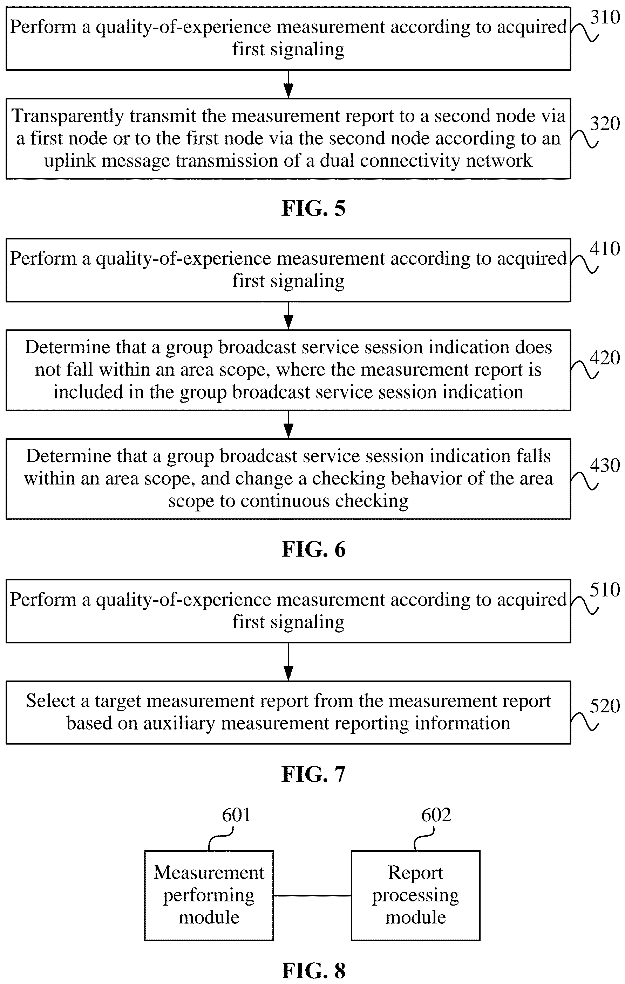

FIG. 5 is a flowchart of another information measurement method according to an embodiment of the present application. This embodiment of the present application is the refinement based on the preceding embodiment of the present application. Referring to FIG. 5, the method provided in this embodiment of the present application specifically includes the steps below.

In step 310, a quality-of-experience measurement is performed according to acquired first signaling.

In step 320, the measurement report is transparently transmitted to a second node via a first node or to the first node via the second node according to an uplink message transmission of a dual connectivity network, where quality-of-experience measurement configuration of the measurement report includes at least target node indication information.

The first node and the second node may be a master node (MN) and a secondary node (SN) in dual connectivity communication. The target node indication information may be indication information for indicating a node for configuring the quality-of-experience measurement. The target node indication information may be indication information of a enumeration type, indication information of an indicator bit type and indication information of a presence indication type.

In the embodiment of the present application, the measurement report generated in the dual connectivity scenario may be transparently transmitted to the second node via the first node or to the first node via the second node, where the measurement report carries at least the target node indication information, and the target node indication information may indicate the node for configuring the quality-of-experience measurement.

In some embodiments of the application, the target node indication information includes at least one of:
enumerated node type information including at least one of the first node or the second node;
a node type indicator bit; or
a first node presence indication.

Specifically, the target node indication information may be implemented in an enumeration manner. The enumerated node type information includes at least the enumerated first node and the enumerated second node. Alternatively, the target node indication information may be implemented through the indicator bit. The first node or the second node may be indicated in different set manners of the indicator bit. Alternatively, the target node indication information may be the first node presence indication. When the first node presence indication is 1, the first node is indicated, and when the first storage node is not 1, the first node is not indicated.

In an example embodiment, in the dual connectivity scenario, since both the MN and the SN can receive the RVQoE measurement report, the SRB5 is used by the SN to transmit the RVQoE measurement report. Further, considering that the base station generating the measurement configuration is expected to be able to receive the RVQoE measurement report, and in the case where only the SRB4 is configured, the measurement report needs to be transparently transmitted to the SN via the MN through uplink information transfer multi-radio dual connectivity. Alternatively, in the case where the SRB5 is configured, the measurement report needs to be transparently transmitted to the MN via the SN through via UL information transfer MRDC. In other words, UL information transfer MRDC needs to support the signaling radio bearer SRB4 and/or the SRB5 for transmitting the RVQoE measurement report. In order for the terminal to recognize the configuration node of the current RVQoE configuration information, indication information of the configuration information is introduced into the RVQoE configuration information, and the RVQoE indication information configured for the RVQoE includes at least one piece of the following information:
(a) the enumerated node type, that is, MN or SN;
(b) a one-bit indication, where, for example, 0 representing MN, and 1 representing SN, or vice versa;
(c) a presence indication, where presence is set to indicate SN, and absence is set to indicate not SN.

FIG. 6 is a flowchart of another information measurement method according to an embodiment of the present application. This embodiment of the present application is the refinement based on the preceding embodiment of the present application. Referring to FIG. 6, the method provided in this embodiment of the present application specifically includes the steps below.

In step 410, a quality-of-experience measurement is performed according to acquired first signaling.

In step 420, that a group broadcast service session indication does not fall within an area scope is determined, where the measurement report is included in the group broadcast service session indication.

In the embodiment of the present application, when the group broadcast service session indication does not fall within the area scope, the measurement report may be carried by the group broadcast service session indication.

In step 430, that a group broadcast service session indication falls within an area scope is determined, and a checking behavior of the area scope is changed to continuous checking.

In the embodiment of the present application, when the group broadcast service session indication falls within the area scope, the checking behavior of the area scope is adjusted to continuous checking.

In an example embodiment, at present, the user equipment checks the area scope only at the time of initiation and continues the QoE session unless the QoE session is released by the base station. Further, to introduce the group broadcast service session indication, when the group broadcast service session indication falls within the area range, to avoid the case where the user equipment stops the group broadcast service task and starts executing a new task but does not execute AreaScope again, the problem may be solved through the methods below.

In solution 1, the group broadcast service session indication does not fall within the area scope, and the QoE and RVQoE measurement reports are included in the group broadcast service session indication.

In solution 2, when the group broadcast service session indication falls within the area scope, the checking behavior of AreaScope is changed to continuous checking.

FIG. 7 is a flowchart of another information measurement method according to an embodiment of the present application. This embodiment of the present application is the refinement based on the preceding embodiment of the present application. Referring to FIG. 7, the method provided in this embodiment of the present application specifically includes the steps below.

In step 510, a quality-of-experience measurement is performed according to acquired first signaling.

In step 520, a target measurement report is selected from the measurement report based on auxiliary measurement reporting information, where the auxiliary measurement reporting information includes at least one of a single-group broadcast service session indication, multi-group broadcast service session indication, a single-group broadcast service session identifier list, a single-slice information indication, multi-slice information indication or a single-slice information list.

The auxiliary measurement reporting information may be information reported by an auxiliary measurement report. The target measurement report may be a measurement report to be reported. The target measurement report may be part or all of the measurement report.

In the embodiment of the present application, one or more target measurement reports may be selected from the measurement report according to the auxiliary measurement reporting information, where the auxiliary measurement reporting information may include at least one of the single-group broadcast service session indication, the multi-group broadcast service session indication, the single-group broadcast service session identifier list, the single-slice information indication, the multi-slice information indication or the single-slice information list.

On the basis of the preceding embodiment of the application, the auxiliary measurement reporting information is included in at least one of quality-of-experience configuration information, downlink information transfer, a radio resource control reestablishment message, a radio resource control configuration message, a radio resource control resume message, a radio resource control reject message or a radio resource control setup message.

In the embodiment of the present application, the auxiliary measurement reporting information may be transmitted through at least one of the quality-of-experience configuration information, the downlink information transfer, the radio resource control reestablishment message, the radio resource control configuration message, the radio resource control resume message, the radio resource control reject message or the radio resource control setup message.

In some embodiments of the application, selecting the target measurement report from the measurement report based on the auxiliary measurement reporting information includes:
checking whether a group broadcast service session indication or slice information is consistent with the auxiliary measurement reporting information when the measurement report is acquired; and taking the measurement report as the target measurement report for reporting in response to determining that the group broadcast service session indication or the slice information is consistent with the auxiliary measurement reporting information.

In the embodiment of the present application, when the measurement report is acquired, the auxiliary measurement reporting information may be compared with the group broadcast service session indication or slice information corresponding to the measurement report. If the group broadcast service session indication or slice information corresponding to the measurement report is the same as the auxiliary measurement reporting information, the measurement report is taken as the target measurement report, and the target measurement report may be reported. Otherwise, the measurement report is not reported.

In an example embodiment, when the user equipment is in the idle state and the inactive state, since the measurement report of the quality-of-experience measurement needs to be stored in an access layer of the user equipment but a corresponding higher layer is interested in the quality-of-experience measurement of only one or some ongoing group broadcast service sessions or slices, to improve the transmission efficiency of the measurement report, the measurement report may be selected based on the group broadcast service session indication or the slice information indication, that is, the auxiliary measurement reporting information includes at least one group broadcast service session indication, multi-group broadcast service session indication, one group broadcast service session identifier list, one slice information indication, multi-slice information indication or one slice information list. The above auxiliary measurement reporting information is included in at least one of QoE configuration information, downlink information transfer (DLInformationTransfer), a radio resource control reestablishment message (RRCReestablishment), a radio resource control configuration message (RRCReconfiguration), a radio resource control resume message (RRCResume), a radio resource control reject message (RRCReject) or a radio resource control setup message (RRCSetup).

In addition, for the above auxiliary measurement reporting information, the measurement report is selected by the application layer of the user equipment, that is, when the report is acquired from the application layer of the user equipment, the group broadcast service session indication information or the slice information is first checked, and only when the group broadcast service session indication information or the slice information is consistent with the indication of the auxiliary information, the user equipment stores the corresponding result in the access layer and reports the corresponding result in time.

In some example embodiments, QoE and RVQoE measurement report uploads are triggered based on cache levels. The specific reason is that the access layer can determine the measurement data only after receiving the measurement report from the application layer. However, since each measurement report received by the access layer from the application layer is in the form of a list, each list contains eight measurement reports and each measurement report corresponds to one cache level, the judgment method includes at least one of the following: reporting is performed only when all measured cache levels meet the configured threshold; reporting is performed only after the average value of the measured cache levels meet the configured threshold; reporting is performed as long as any measured cache level meets the configured threshold; reporting is performed when the proportion of the number of measurements of the cache level threshold exceeding one percentage configured or predefined based on the base station is met; reporting is performed only when the average value after the highest and lowest measured cache levels are removed meets the configured threshold; reporting is performed only when the median among measured cache levels meets the configured threshold; the report upload is triggered when the measurement reports meet the first reporting condition and then meet the reporting condition for N1 consecutive times, where N1 is a value configured or predefined by the network; reporting is stopped as long as any measured cache level does not meet the configured threshold; reporting is stopped when the average value of the measured cache levels does not meet the configured threshold; reporting is stopped as long as all measured cache levels do not meet the configured threshold; reporting is stopped when the proportion of the number of measurements of the cache level threshold being lower than one percentage configured or predefined based on the base station is met; reporting is stopped when the average value after removing the highest and lowest measured cache levels does not meet the configured threshold; reporting is stopped when the median among measured cache levels does not meet the configured threshold; the report upload is stopped when the measurement reports do not meet the first reporting condition and then do not meet the reporting condition for N2 consecutive times, where N2 is a value predefined or configured by the network. The manner for reporting measurement reports includes at least one of the following: in one list, only measurement reports triggered in eight measured cache levels are reported; in one list, as long as one measured cache level is triggered, all measurement reports in the one list need to be uploaded.

In some example embodiments, in communication scenarios where a small data transmission enhancement feature is introduced, the terminal is allowed to quickly complete small data transmission in the radio resource control-inactive (RRC-inactive) state without transitioning to the radio resource control connected (RRC-connected) state, which reduces delay and saves the power consumption of the terminal. Under RRC-inactive, the base station triggers the terminal to read information of the system information block (SIB) 9 or the SIB16 through paging information or downlink control information (DCI), where the paging information or the downlink control information includes common indication information.

The common indication information carried in the paging information includes at least one of a radio network temporary identifier of the terminal, an indication for triggering a four-step RACH for transmitting clock quality information, an indication for triggering a two-step RACH for transmitting clock quality information, clock change indication information, SIB9 change indication information or indication information included in the SIB16.

The common indication information carried in the downlink control information includes at least one of an indication for triggering a four-step Random Access CHannel (RACH) for transmitting clock quality information, an indication for triggering a two-step RACH for transmitting clock quality information, clock change indication information, SIB9 change indication information or indication information included in the SIB 16.

Alternatively, in a short message of the downlink control information, a reserved bit is used for indicating at least one of an indication for triggering a four-step RACH for transmitting clock quality information, an indication for triggering a two-step RACH for transmitting clock quality information, clock change indication information or SIB9 change indication information.

FIG. 8 is a structural diagram of an information measurement apparatus according to an embodiment of the present application. The apparatus can perform the information measurement method of any embodiment of the present application and has function modules and beneficial effects corresponding to the performed method. The apparatus may be implemented by software and/or hardware. As shown in FIG. 8, the apparatus provided in the embodiment of the present application specifically includes a measurement performing module 601 and a report processing module 602.

The measurement performing module 601 is configured to perform a quality-of-experience measurement according to acquired first signaling.

The report processing module 602 is configured to process a measurement report of the quality-of-experience measurement.

In some embodiments of the application, the first signaling in the apparatus includes at least type indication information, and the type indication information includes at least one of:
an enumerated quality-of-experience type including at least one of a signaling-based quality-of-experience measurement or a management-based quality-of-experience measurement;
a quality-of-experience type indicator bit; or
a signaling presence indication identifier.

In some other embodiments of the application, the measurement report in the apparatus includes type indication information of the quality-of-experience measurement.

In some other embodiments of the application, the type indication information included in the measurement report includes at least one of:
type indication information configured for each measurement configuration application layer identifier; or
type indicator bits configured according to a numbering order of each measurement configuration application layer identifier.

In some embodiments of the application, the apparatus further includes a configuration storage module for storing a measurement configuration application layer identifier and type indication information configured for the quality-of-experience measurement.

In some embodiments of the application, the report processing module 602 in the apparatus includes a storage unit for storing the measurement report according to a preset report priority. In the preset report priority, a priority of a management-based measurement report is lower than a priority of a signaling-based measurement report.

On the basis of the preceding embodiment of the application, the storage unit is specifically configured to: determine target measurement reports lower than the preset report priority of the measurement report in a preset storage area; and determine a stored measurement report stored for the longest time among the target measurement reports, and replace the stored measurement report with the measurement report.

In some embodiments of the application, the storage unit is further specifically configured to: determine each stored measurement report in a preset storage area, where each stored measurement report includes a replaceable storage specification, and the replaceable storage specification is indicated based on storage specification indication information configured for the quality-of-experience measurement; and
select a target stored measurement report among all stored measurement reports according to a preset selection rule, and replace the target stored measurement report with the measurement report until a replacement storage of the target stored measurement report is greater than or equal to a replaceable storage specification of the target stored measurement report.

In some embodiments of the application, the preset selection rule in the storage unit includes at least one of:
selecting the target stored measurement report according to an order of the management-based measurement report first and then the signaling-based measurement report; or
selecting the target stored measurement report according to an order of a measurement report stored for a long time first and then a measurement report stored for a short time.

In some embodiments of the application, the report processing module 602 in the apparatus includes a message processing unit specifically for at least one of: not transmitting an availability indication of the measurement report to a new node when the new node is accessed, and transmitting the availability indication of the measurement report to an original requesting node when the original requesting node that initiates the quality-of-experience measurement is re-accessed; transmitting an availability indication of the measurement report to a new node when the new node is accessed; releasing stored quality-of-experience measurement configuration information and the measurement report when a new node is accessed; or releasing stored quality-of-experience measurement configuration information and the measurement report when an original requesting node that initiates the quality-of-experience measurement is disconnected.

In some embodiments of the application, the availability indication of the measurement report in the message processing unit is included in at least one of terminal device assistance information, an uplink information transmission or a terminal device information response.

In some embodiments of the application, the report processing module 602 in the apparatus includes a dual-link unit for transparently transmitting the measurement report to a second node via a first node or to the first node via the second node according to an uplink message transmission of a dual connectivity network, where quality-of-experience measurement configuration of the measurement report includes at least target node indication information.

On the basis of the preceding embodiment of the application, the target node indication information in the dual-link unit includes at least one of:
enumerated node type information including at least one of the first node or the second node;
a node type indicator bit; or
a first node presence indication.

In some embodiments of the application, the report processing module 602 in the apparatus includes a group broadcast processing unit for determining that a group broadcast service session indication does not fall within an area scope, where the measurement report is included in the group broadcast service session indication; or determining that a group broadcast service session indication falls within an area scope, and changing a checking behavior of the area scope to continuous checking.

In some embodiments of the application, the report processing module 602 in the apparatus includes an auxiliary processing unit for selecting a target measurement report from the measurement report based on auxiliary measurement reporting information, where the auxiliary measurement reporting information includes at least one of a single-group broadcast service session indication, multi-group broadcast service session indication, a single-group broadcast service session identifier list, a single-slice information indication, a multi-slice information indication or a single-slice information list.

On the basis of the preceding embodiment of the application, the auxiliary measurement reporting information is included in at least one of quality-of-experience configuration information, downlink information transfer, a radio resource control reestablishment message, a radio resource control configuration message, a radio resource control resume message, a radio resource control reject message or a radio resource control setup message.

On the basis of the preceding embodiment of the application, the auxiliary processing unit is specifically configured to: check whether a group broadcast service session indication or slice information is consistent with the auxiliary measurement reporting information when the measurement report is acquired; and take the measurement report as the target measurement report for reporting in response to determining that the group broadcast service session indication or the slice information is consistent with the auxiliary measurement reporting information.

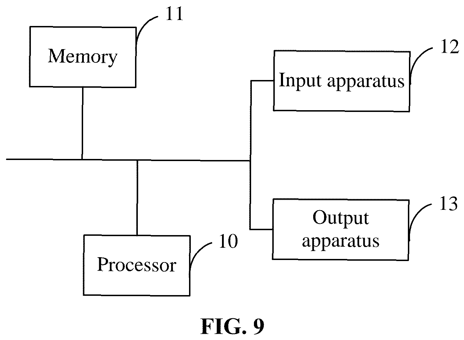

FIG. 9 is a structural diagram of an electronic device according to an embodiment of the present application. The device electronic includes a processor 10, a memory 11, an input apparatus 12, and an output apparatus 13. One or more processors 10 may be included in the electronic device. One processor 10 is shown as an example in FIG. 9. The processor 10, the memory 11, the input apparatus 12, and the output apparatus 13 in the electronic device may be connected via a bus or in other manners. The connection via a bus is shown as an example in FIG. 9.

As a computer-readable storage medium, the memory 11 may be configured to store software programs, computer executable programs and modules, for example, modules (a measurement performing module 601 and a report processing module 602) corresponding to the information measurement apparatus in the embodiment of the present application. The processor 10 executes software programs, instructions, and modules stored in the memory 11 to perform function applications and data processing of the electronic device, that is, to perform the preceding information measurement method.

The memory 11 may include a program storage area and a data storage area, where the program storage area may store an operating system and an application program required by at least one function while the data storage area may store data created according to use of the electronic device. In addition, the memory 11 may include a high-speed random-access memory and may also include a nonvolatile memory such as at least one disk memory, a flash memory, or another nonvolatile solid-state memory. In some examples, the memory 11 may further include memories remotely disposed relative to the processor 10. These remote memories may be connected to the electronic device via a network. Examples of the network include, but are not limited to, the Internet, an intranet, a local area network, a mobile communication network, and a combination thereof.

The input apparatus 12 may be configured to receive inputted digital or character information and generate key signal input related to user settings and function control of the electronic device. The output apparatus 13 may include a display device such as a display screen.

An embodiment of the present application provides a storage medium including computer-executable instructions. When executed by a computer processor, the computer-executable instructions cause the computer processor to perform an information measurement method. The method includes:
performing a quality-of-experience measurement according to acquired first signaling; and processing a measurement report of the quality-of-experience measurement.

From the preceding description of embodiments, it is apparent to those skilled in the art that the present application may be implemented by software and necessary general-purpose hardware or may be implemented by hardware, but the former is a preferred implementation in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the information measurement methods in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all steps of the preceding method and function modules/units in the preceding apparatus or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory or other memory technologies, a portable compact disc read-only memory (CD-ROM), a digital versatile disc (DVD) or other optical storages, a magnetic cassette, a magnetic tape, a magnetic disk or other magnetic storage devices, or any other medium that is used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

## Claims

1. An information measurement method, comprising:
performing a quality-of-experience measurement according to acquired first signaling; and
processing a measurement report of the quality-of-experience measurement.

2. The method according to claim 1, wherein the first signaling comprises at least type indication information, and the type indication information comprises at least one of:
an enumerated quality-of-experience type comprising at least one of a signaling-based quality-of-experience measurement or a management-based quality-of-experience measurement;
a quality-of-experience type indicator bit; or
a signaling presence indication identifier.

3. The method according to claim 1, wherein the measurement report comprises type indication information of the quality-of-experience measurement.

4. The method according to claim 3, wherein the type indication information comprised in the measurement report comprises at least one of:
type indication information configured for each measurement configuration application layer identifier; or
type indicator bits configured according to a numbering order of each measurement configuration application layer identifier.

5. The method according to claim 1, further comprising: storing a measurement configuration application layer identifier and type indication information configured for the quality-of-experience measurement.

6. The method according to claim 1, wherein processing the measurement report of the quality-of-experience measurement comprises:
storing the measurement report according to a preset report priority, wherein in the preset report priority, a priority of a management-based measurement report is lower than a priority of a signaling-based measurement report.

7. The method according to claim 6, wherein storing the measurement report according to the preset report priority comprises:
determining target measurement reports lower than the preset report priority of the measurement report in a preset storage area; and
determining a stored measurement report stored for a longest time among the target measurement reports, and replacing the stored measurement report with the measurement report.

8. The method according to claim 6, wherein storing the measurement report according to the preset report priority comprises:
determining each stored measurement report in a preset storage area, wherein each stored measurement report comprises a replaceable storage specification, and the replaceable storage specification is indicated based on storage specification indication information configured for the quality-of-experience measurement; and
selecting a target stored measurement report among all stored measurement reports in the preset storage area according to a preset selection rule, and replacing the target stored measurement report with the measurement report until a replacement storage of the target stored measurement report is greater than or equal to a replaceable storage specification of the target stored measurement report.

9. The method according to claim 8, wherein the preset selection rule comprises at least one of:
selecting the target stored measurement report according to an order of the management-based measurement report first and then the signaling-based measurement report; or
selecting the target stored measurement report according to an order of a measurement report stored for a long time first and then a measurement report stored for a short time.

10. The method according to claim 1, wherein processing the measurement report of the quality-of-experience measurement comprises at least one of:
not transmitting an availability indication of the measurement report to a new node when the new node is accessed, and transmitting the availability indication of the measurement report to an original requesting node when the original requesting node that initiates the quality-of-experience measurement is re-accessed;
transmitting an availability indication of the measurement report to a new node when the new node is accessed;
releasing stored quality-of-experience measurement configuration information and the measurement report when a new node is accessed; or
releasing stored quality-of-experience measurement configuration information and the measurement report when an original requesting node that initiates the quality-of-experience measurement is disconnected.

11. The method according to claim 10, wherein the availability indication of the measurement report is comprised in at least one of terminal device assistance information, an uplink information transmission or a terminal device information response.

12. The method according to claim 1, wherein processing the measurement report of the quality-of-experience measurement comprises:
transparently transmitting the measurement report to a second node via a first node or to the first node via the second node according to an uplink message transmission of a dual connectivity network;
wherein quality-of-experience measurement configuration of the measurement report comprises at least target node indication information.

13. The method according to claim 12, wherein the target node indication information comprises at least one of:
enumerated node type information comprising at least one of the first node or the second node;
a node type indicator bit; or
a first node presence indication.

14. The method according to claim 1, wherein processing the measurement report of the quality-of-experience measurement comprises:
determining that a group broadcast service session indication does not fall within an area scope, wherein the measurement report is comprised in the group broadcast service session indication; or
determining that a group broadcast service session indication falls within an area scope, and changing a checking behavior of the area scope to continuous checking.

15. The method according to claim 1, wherein processing the measurement report of the quality-of-experience measurement comprises:
selecting a target measurement report from the measurement report based on auxiliary measurement reporting information, wherein the auxiliary measurement reporting information comprises at least one of a single-group broadcast service session indication, a multi-group broadcast service session indication, a single-group broadcast service session identifier list, a single-slice information indication, multi-slice information indication or a single-slice information list.

16. The method according to claim 15, wherein the auxiliary measurement reporting information is comprised in at least one of:
quality-of-experience configuration information;
downlink information transfer;
a radio resource control reestablishment message;
a radio resource control configuration message;
a radio resource control resume message;
a radio resource control reject message; or
a radio resource control setup message.

17. The method according to claim 15, wherein selecting the target measurement report from the measurement report based on the auxiliary measurement reporting information comprises:
checking whether a group broadcast service session indication or slice information is consistent with the auxiliary measurement reporting information when the measurement report is acquired; and
taking the measurement report as the target measurement report for reporting in response to determining that the group broadcast service session indication or the slice information is consistent with the auxiliary measurement reporting information.

18. An electronic device, comprising:
at least one processor; and
a memory configured to store at least one program;
wherein the at least one program, when executed by the at least one processor, causes the at least one processor to perform the information measurement method according to any one of claims 1 to 17.

19. A computer-readable storage medium storing at least one program, wherein the at least one program is configured, when executed by at least one processor, to cause the at least one processor to perform the information measurement method according to any one of claims 1 to 17.
